# EUROPEAN PATENT SPECIFICATION

(11) **EP 1 550 378 B1**
(45) Date of publication and mention of the grant of the patent: **03.06.2009**
(21) Application number: 03758111.3
(22) Date of filing: 08.10.2003
(51) Int. Cl.: A23L 1/36, A23B 7/16

(54) **EDIBLE-FILM-COATED DRIED FRUIT AND PRODUCTION METHOD THEREOF**
ESSBARE, MIT EINEM FILM ÜBERZOGENE FRUCHT UND HERSTELLUNGSVERFAHREN DAFÜR
FRUIT SEC RECOUVERT D'UNE PELLICULE COMESTIBLE ET SON PROCEDE D'OBTENTION

(30) Priority: 09.10.2002 ES 200202310
(43) Date of publication of application: 06.07.2005
(73) Proprietor: La Morella Nuts, S.A., 43206 Reus (Tarragona) (ES)
(72) Inventor: REGUANT MIRANDA, Jordi, 43206 Reus (Tarragona) (ES); RAMIREZ MARCO, Bartolome, 43206 Reus (Tarragona) (ES)
(74) Representative: Carpintero Lopez, Francisco
(86) International application number: PCT/ES2003/000512
(87) International publication number: WO 2004/032654

(56) References cited:
- WO-A1-91/15548
- US-A- 4 543 370
- US-A- 4 822 625
- US-A- 4 981 707

## Description

### FIELD OF THE INVENTION

The invention lies in the field of the preservation (protection) of foods and more specifically in the preservation of nuts. The invention refers to said nuts provided with an edible coating, to a procedure for producing it and to products stemming from said coated nuts.

### BACKGROUND OF THE INVENTION

The use of edible coating films to protect foods is a well-known fact. The use of such films, amongst other purposes, is to restrict the entry of gases (oxygen, water vapour) which may speed up the process of degeneration of the food product and limit the migration of fats or substances soluble in them, such as antioxidants, flavours, or other additives. Alternatively, these films may be used as the carrier for various additives.

Different products used for the preparation of edible food coatings are already known, as well as various methods for producing them and applying them to the foods to be protected.

US patent 5,286,502 describes the use of edible films for protecting chewing gums as an under layer for subsequent coating with wax. Edible film-forming substances (filmogenic substances) include derivatives of cellulose, modified starch, dextrins, gelatine, zeins and their mixtures. The cellulose derivatives mentioned include such water-soluble derivatives as ethyl cellulose, hydroxypropylmethyl cellulose, carboxymethyl cellulose, methyl cellulose, sodium hydroxymethyl cellulose and their mixtures.

US patent 4,543,370 describes an edible film in dry powder form and its method of production and application. This coating starts off from a dry mixture of edible filmogenic polymer, edible particles of pigment and a plasticizing food polymer. The method of production and application comprises mixing (in powder form) a filmogenic polymer and the pigment particles in a mixer, adding the plasticizer to the mixer, which contains the polymer-pigment mixture, and blending it until the final mix is sufficiently homogeneous to form the coating composition. Mentioned amongst the products proposed are ethyl cellulose, hydroxypropyl cellulose, hydroxypropyl methyl cellulose, cellulose phthalate acetate, ethyl cellulose, polyvinyl pyrrolidine, sodium ethyl cellulose sulphate, zein or polyvinyl phthalate acetate.

US patent 4,820,533 proposes the preparation of edible barriers that make it possible to control other parameters, such as the water activity of the product and, therefore, protect them from the environmental conditions. The barriers suggested are formed of shellac and modified celluloses, for example, hydroxypropyl cellulose or hydroxypropylmethyl cellulose. The edible products to which the application of this barrier is proposed are hard plain biscuits, ice cream cones, cereal bars, cheese slices, caramel bars, etc., all of them in laminar form.

US patent 5,976,582 describes a method for the coating of food substances with fat content, for instance, chewing gum, nuts, sweets, which comprises the use, as a pre-coating substance, of hydroxypropyl starch, mainly tapioca. This compound is dissolved in water at a temperature of between 30°C and 50°C and it is applied in one or more layers on the substrate to be coated in a rotary drum.

WO 91/15548 discloses in general substrates such as food, tablets, breakfast cereals, agricultural seeds, etc., coated with a protective film comprising an effective amount of a combination of maltodextrin, a cellulosic polymer and a plasticizer, in a range comprised between 2.5 to 20% by wt, preferably 5 to 10% and, optionally, a secondary film former, a detackifier, a flow aid and a colorant.

US 4,981,707 discloses dextrin-based food grade adhesives (mixtures of sugar with an adhesive: see col. 1, lines 43-49) including minor proportions of a xanthan, carboxymethylcelullose or a combination of thereof, to secure salt or other particular flavouring compositions. The dextrin based adhesive preferably contains a sugar (especially a reducing sugar), including fructose, dextrose and specially lactose. Typically the dextrin to sugar ratio is in the range of about five to one through about twenty to one and preferably about six to one through about ten to ten.

US 4,543,370 discloses roasted honey nuts coated by a process which utilizes honey as a part of both wet and drying coating compositions applied to a nut to achieve and adhesive base which forms part of a highly flavourful coating, and an additional consisting of a dry flavour coating mixture of honey, sugar and salt.

In the specific case of nuts, the application of a first coating with starch has been described, followed by a coating with gelatine and, lastly the addition of a seasoning mix (US 4,769,248). The coating of fried nuts with films of proteins of vegetable and animal origin, for instance, egg albumin, soybean protein, modified soybean protein, gelatine and their mixtures, is described in US patent 5,149,562.

### SCOPE OF THE INVENTION

The invention addresses the problem of providing a nut with an extended period of useful life without altering the organoleptic properties of the product, unless desired otherwise.

The solution proposed by this invention is based on the fact that it has been observed that the application of an edible coating film, made from a polysaccharide selected from amongst hydroxypropylmethyl cellulose (HPMC), hydroxypropyl cellulose (HPC), methyl cellulose (MC), carboxymethyl cellulose (CMC), ethylmethyl cellulose (EMC), acacia gum (AG), maltodextrin (MD), a lipid or a combination of a number of lipids, and their mixtures, to said nut provides it with a protection that extends its useful life. Advantageously, said coating has a very small thickness and, moreover, it does not alter the organoleptic properties of the nut to be coated, unless expressly desired otherwise (for instance, when this coating is used as a carrier for additives, for example colours and/or flavours).

Accordingly, an initial aspect of this invention refers to a nut provided with an edible coating which comprises a nut and at least one coating layer for this nut, which comprises an edible film, said film consisting of an edible compound selected from amongst hydroxypropylmethyl cellulose (HPMC), hydroxypropyl cellulose (HPC), methyl cellulose (MC), carboxymethyl cellulose (CMC), ethylmethyl cellulose (EMC), acacia gum (AG), maltodextrin (MD), a lipid or a combination of various lipids, and their mixtures.

A second aspect of this invention refers to a procedure for producing this nut provided with an edible coating.

A third aspect of this invention refers to a product that comprises this nut provided with an edible coating and, what is more, an additional coating selected from amongst sugar, honey, salt or chocolate, which covers this nut provided with an edible coating, giving rise to respective crunchy, caramelized, salted (roasted or fried), caramelized and salted, or chocolate-coated type products.

An edible coating such as those set forth in this description provides the nut covered with this coating layer with protection and thereby extends its useful life. The type of protection conferred by this coating may be physical-mechanical (barrier for gases) and/or chemical, in the event of this protection acting as a carrier for antioxidant additives or the like. This concept is of great interest as it utilizes the synergy between the action of antioxidants (usually commercial mixtures of them) and the protection as a barrier to the gases (especially to oxygen) of the coatings. Thus, the chemical action of the antioxidants extends the useful life of the product, while the barrier film acts physically on the surface preventing on the one hand the action of the gases on the nut (mainly oxygen) and, therefore, retarding its oxidizing process; and, on the other, impeding the migration of the antioxidant to the exterior and, therefore, facilitating the penetration of the additive into the interior of the nut.

The edible coating set forth in this description also offers the advantage of not altering the organoleptic properties of the nut to be coated. Nonetheless, if so wished, the original organoleptic properties and/or characteristics of said nut may be altered at discretion by means of the addition of the desired additives, said coating acting either as a carrier or barrier (protection) for the aforesaid additives.

### BRIEF DESCRIPTION OF THE FIGURES

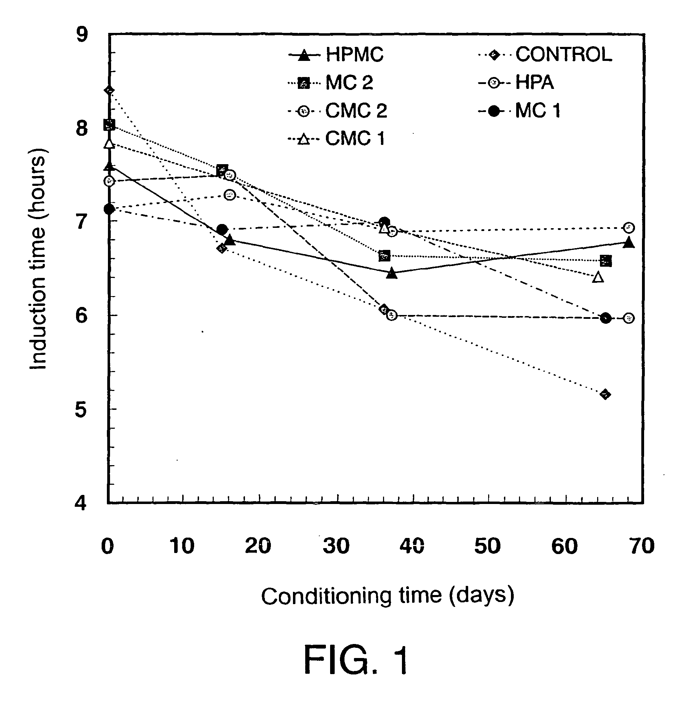

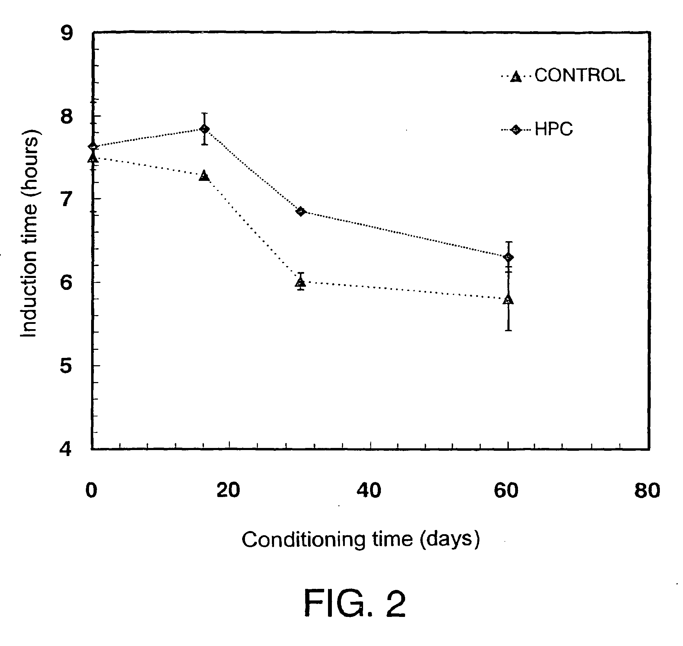

Figures 1 and 2 are graphic representations of the oxidative stability (measured as induction time by the Rancimat method at 120°C) of peeled roasted hazelnuts, both uncoated and coated with CMC 1, CMC 2, HPMC, MC 1, MC 2, HPA or with HPC depending on the prior conditioning time of the samples (in the oven, 35°C, 75% relative humidity (hr), open pack) [see Example 1].

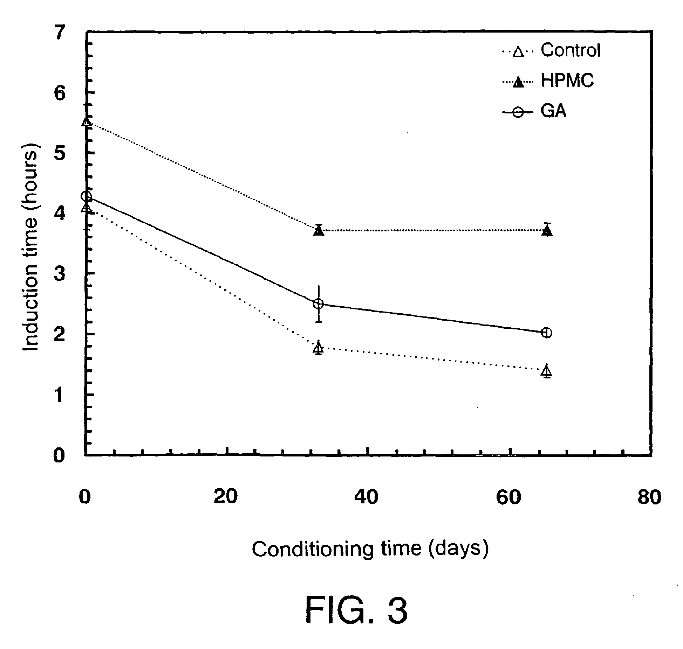

Figure 3 is a graphic representation of the oxidative stability (measured as induction time by the Rancimat method at 120°C) of caramelized Marcona almond, both uncoated and coated with AG or HPMC depending on the prior conditioning time of the samples in the oven, 35°C, 75% relative humidity (hr), open pack) (confidence interval 95%) [see Example 2].

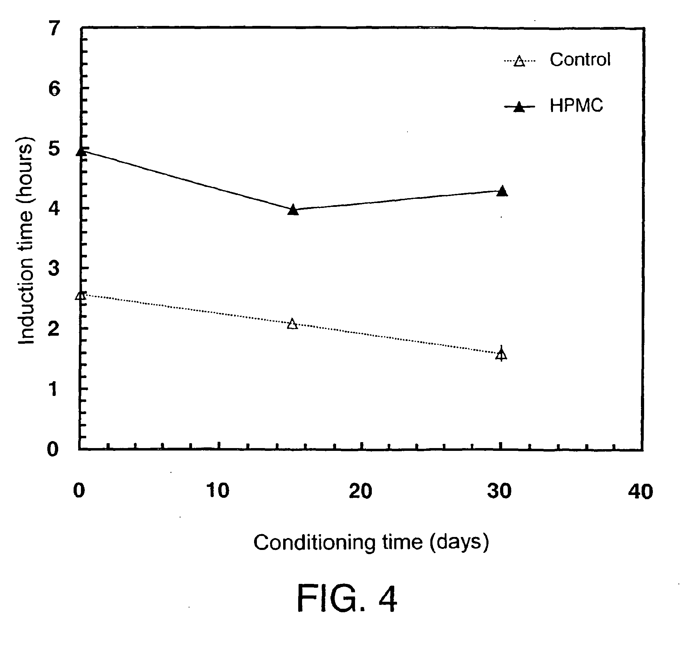

Figure 4 is a graphic representation of the oxidative stability (measured as induction time by the Rancimat method at 120°C) of soaked, salted and roasted peeled Largueta almond, both uncoated and coated with HPMC depending on the prior conditioning time of the samples in the oven, 35°C, 75% relative humidity (hr), open pack) (confidence interval 95%) [see Example 3].

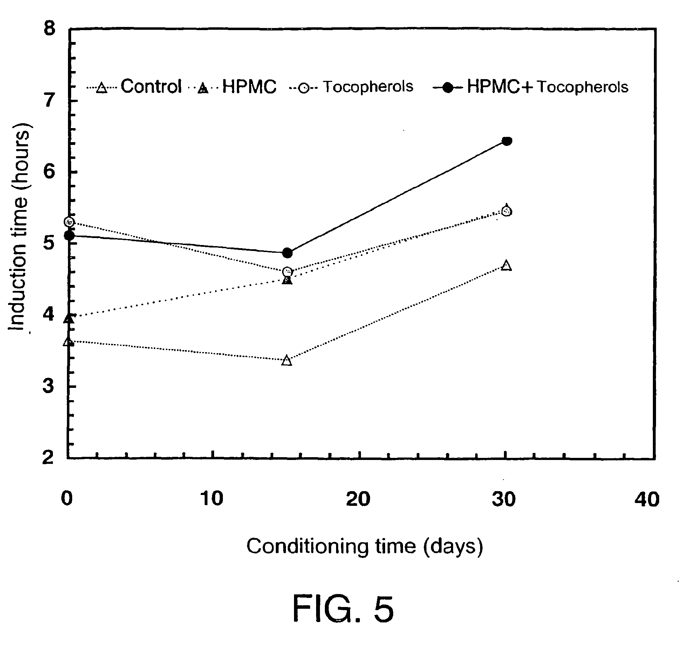

Figure 5 is a graphic representation of the oxidative stability (measured as induction time by the Rancimat method at 120°C) of chopped and roasted pecan nut, both untreated and treated in different ways against oxidation (coated with HPMC, treated with tocopherols, and treated with tocopherols and coated with HPMC), depending on the prior conditioning time of the samples in the oven, 35°C, 75% relative humidity (hr), open pack) (confidence interval 95%) [see Example 4].

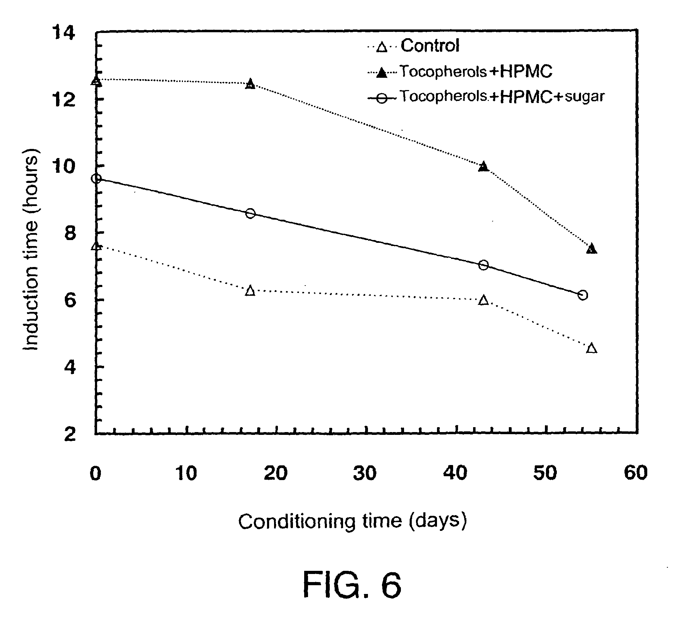

Figure 6 is a graphic representation of the oxidative stability (measured as induction time by the Rancimat method at 120°C) of roasted almond sticks, both untreated and treated in different ways against oxidation (treated with tocopherols and coated with HPMC, and treated with tocopherols, coated with HPMC, and coated with sugar as well), depending on the prior conditioning time of the samples (samples in vacuum-sealed plastic bags exposed at room temperature) [see Example 5].

### DETAILED DESCRIPTION OF THE INVENTION

In an initial aspect the invention refers to a nut provided with an edible coating, hereinafter the coated nut of the invention, which comprises:
a nut, and
at least, a coating layer for said nut that comprises an edible film, said films consisting of an edible compound selected from the group formed by hydroxypropylmethyl cellulose (HPMC), hydroxypropyl cellulose (HPC), methyl cellulose (MC), carboxymethyl cellulose (CMC), ethylmethyl cellulose (EMC), acacia gum (AG), maltodextrin (MD), a lipid or a combination of various lipids, and their mixtures.

The term "nut", as used in this description, refers to any edible nut or dried fruit, whether roasted or not (snack-type product), or which is used as decoration or as a filling material in pastry-making and confectionery, or in the ready-cooked products industry, in battered products, in sausage meats, in biscuits, in ice creams, in nougats, as well as in ingredients for yoghourts, cheeses and creams (custard), etc. By way of example, these nuts may be almonds, hazelnuts, walnuts, peanuts, pistachios, pine nuts, macadamia nuts, pecan nuts, raisins, cocoa beans, cashew nuts, extruded cereals, chestnuts, soybean derivatives, etc.

The nut to which the edible coating may be applied in accordance with the present invention may be whole or chopped, for example, in the form of grain, sticks or slivers, of any granulometry or distribution of shape and size.

The coated nut of the invention contains, at least, one coating layer that comprises an edible film. Said edible film consists of an edible compound selected from the group formed of HPMC, HPC, MC, CMC, EMC, AG, MD, an edible lipid or a combination of various edible lipids, and their mixtures.

As used in this description, the term "edible lipid" includes any lipid contained in the list of food additives suitable for consumption in the relevant national legislations, for example, fatty acids, triglycerides, etc. Similarly, the term "edible protein" includes any protein, of natural, synthetic or recombinant origin, included in the list of food additives suitable for consumption in the relevant national legislations, for example, albumin, soybean proteins, etc.

In a particular embodiment, said edible film comprises an edible compound selected from HPMC, HPC, MC, CMC, EMC and their mixtures. In another particular embodiment, said edible film comprises a mixture of AG and MD. In another particular edible film comprises a mixture of AG and MD. In another particular embodiment, said edible film comprises a mixture of (i) a cellulose ether selected from amongst HPMC, HPC, MC, CMC, EMC and their mixtures, and (ii) AG. In another particular embodiment, said edible film comprises a mixture of (i) a cellulose ether selected from amongst HPMC, HPC, MC, CMC, EMC and their mixtures, and (ii) an edible lipid or a combination of various edible lipids.

The amount of edible compound present in the coated nut of the invention may vary within a wide range. In one particular embodiment, the amount of edible compound present in the coated nut of the invention, expressed in dry weight in relation to the total weight of the coated nut of the invention, lies between 0.05 and 4%, preferably between 0.05 and 2%.

The thickness of the coating layer covering the nut may vary within a wide range. In one particular embodiment, the thickness of said coating layer present on the coated nut of the invention lies between 5 µm and 1 mm, preferably between 10 and 200 µm. The thickness of the coating film on the coated nut of the invention as well as the amount of edible compound in relation to the centre (nut) are appreciably lower than those presented by other types of coatings.

The edible compounds used in the coating layer of the coated nut of the invention provide a good lipid and fat protection as well as suitable protection against the entry of oxygen and humidity, which extends the useful life of the nut. Depending on the final application of the coated nut of the invention, this may contain one or more edible lipids, for example, one or more fatty acids, in order to reduce permeability in high humidity environments or even in direct contact with water, as would be the case of an ice cream matrix.

The water-soluble cellulose ethers that may be used in the edible film of the coating layer permit a treatment at high temperatures, for instance, between 150°C and 180°C, as is the case of frying, caramelizing with honey and sugar or roasting.

The edible coating layer present on the coated nut of the invention confers mechanical strength on the nut and, at the same time, acts as a selective barrier against gases, fats, etc. In addition, this edible coating layer may act as a carrier for additives or other sugar-based coating films (crunches), honey (caramelizing), salt (fried or roasted), chocolate (chocolate coatings) or combinations of sweet and savoury. When this coating is made with sugars, honey, salt or chocolate, the prior coating (pre-coating) with the layer that comprises a film of an edible compound according to the invention provides an additional protection against fat migration.

The coating layer present on the coated nut of the invention may contain, if so wished, one or more additives acceptable from the food point of view. In one particular embodiment, said additives are selected from amongst plasticizers (which permit enhancement of the mechanical characteristics of the edible film coating the nut), antioxidants (for achieving a synergic protection effect, as mentioned above), functional and/or bioactive or nutraceutical components (substances or mixtures with substances considered beneficial for lowering the risk of suffering from certain diseases), and additives that alter the organoleptic features of the nut to which they are applied, for example, colours, flavourings, flavour boosters, sweeteners, polishers, etc.

In another aspect, the invention refers to a procedure for obtaining a coated nut of the invention that comprises the following stages:
a) applying a filmogenic solution that comprises a solvent and an edible compound selected from the group formed of hydroxypropylmethyl cellulose (HPMC), hydroxy propyl cellulose (HPC), methyl cellulose (MC), carboxymethyl cellulose (CMC), ethylmethyl cellulose (EMC), acacia gum (AG), maltodextrin (MD), an edible lipid or a combination of various edible lipids, and their mixtures, on the surface of a nut to be coated; and
b) drying the filmogenic solution deposited on the surface of said nut.

The filmogenic solution comprises the above-mentioned edible compound in a suitable solvent. In one particular embodiment, said filmogenic solution consists of a solvent and a cellulose ether selected from the group formed of HPMC, HPC, MC, CMC, EMC, and their mixtures. In another particular embodiment, said filmogenic solution comprises a mixture of AG and MD. In another particular embodiment, said filmogenic solution comprises a mixture of (i) a cellulose ether selected from amongst HPMC, HPC, MC, CMC, EMC and their mixtures, and (ii) AG. In another particular embodiment, said filmogenic solution comprises a mixture of (i)a cellulose ether selected from amongst HPMC, HPC, MC, CMC, EMC, and their mixtures, and (ii) an edible lipid or a combination of various edible lipids. These compounds may be incorporated into the same solution or in different solutions. In fact, various solutions may be used on the same nut depending on the different filmogenic products that we wish to use, for example, an aqueous solution of a polysaccharide derivative and a lipid dissolved in an oil. In the case of different edible compounds miscible in the same medium (water, alcohol, fat, etc.) the best procedure may be to prepare and apply the solution of each one of said edible compounds separately, or else it may be more appropriate to prepare the solution of each one of said edible compounds and combine said solutions together in one or more solutions prior to the simultaneous or sequential application of same. In the event of our wishing to add different compounds miscible in different mediums (for example a compound miscible in water and another miscible in a fat or a lipid) the method of application is generally sequential. Similarly, emulsions can be formed from immiscible solutions, which, after being applied to the product and left to stand for a certain time, separate into differentiated layers (Kamper, S.L., Fennema, O. "Water vapor permeability of an edible, fatty acid, bilayer film". J. Food Sci., 1984; 49:1482-1485; Kamper, S.L., Fennema, O. "Use of an edible film to maintain water vapor gradients in foods". J. Food Sci., 1985; 50:382-384).

The solvent is chosen in accordance with the type of edible compound present in the filmogenic solution. In general, when the edible compound present in the filmogenic solution is a polysaccharide the solvent is water or an alcohol, whereas, when it is a lipid, the solvent is the actual lipid in a liquid or liquid fat phase, although in some cases it may be an alcohol.

The concentration of the edible compound in the filmogenic solution may vary within a broad range, depending, amongst other factors, on the edible compound chosen, the solvent and the temperature at which it is prepared. In general, the concentration of the edible compound in the filmogenic solution lies between 1% and 50% by weight. By way of example, when the filmogenic solution comprises a cellulose ether selected from amongst HPMC, HPC, MC, CMC, EMC, and their mixtures, the concentration of said edible compound in the filmogenic solution lies, advantageously, between 1% and 20% by weight, preferably, between 2% and 14% by weight.

The filmogenic solution is prepared by dissolving the edible compound in a suitable solvent, at the appropriate temperature, which depends, amongst other factors, on the edible compound and on its solubility in the chosen solvent. An expert on the matter may easily set the appropriate conditions for solubilizing the edible compound by choosing both the most appropriate solvent and the temperature. By way of example, when the edible compound is HPC, said polysaccharide dissolves in water or alcohol, at a temperature below 38°C, whereas when it is HPMC, CMC or MC it dissolves in water or alcohol either at a temperature below 38°C or else at a temperature equal to or greater than 38°C; although in the case of HPMC and MC it is advisable to prepare an initial dispersion in hot water at 80-90°C to prevent the clots referred to as "fish eyes". Likewise, when the edible compound is a starch derivative it is necessary to raise the temperature in order to be able to dissolve the compound, normally to between 50°C and 70°C. Similarly, for the case of AG it is best to raise the temperature up to 85-90 °C.

The above-mentioned additives possibly present in the coated nut of the invention, may be added to the coated nut with the natural edible polymer (or derivative of same) *a posteriori,* i.e. after completing the coating with the filmogenic solution. In another alternative embodiment, said additives are incorporated into the nut prior to coating, i.e. *a priori.* The additives may also be dissolved in a fat, applied to the nut and subsequently coated with a layer of hydrocoloid (from an aqueous solution of a cellulose derivative, as HPMC, for instance) or another coating or combination of edible coatings.

The filmogenic solution may be applied to the surface of the nut to be coated by any conventional method, using any standard equipment or appliance, in conditions that enable a uniform coating to be obtained on said nut. In one particular embodiment, said filmogenic solution is applied to the nut in a rotary drum by dripping or spraying.

The amount of filmogenic solution that is applied to the nut to be coated may vary within a broad range. However, in one particular embodiment, the amount of filmogenic solution to be applied is such that it permits an amount of edible compound to be obtained on the coated nut of the invention, expressed in dry weight in relation to the total weight of the coated nut of the invention, between 0.05 - 4%, preferably between 0.05 - 2%, as well as a thickness layer of coating on the coated nut of the invention between 5 µm - 1 mm, preferably, between 10 - 200 µm.

After applying the filmogenic solution to the nut, said filmogenic solution is then dried. The drying of said filmogenic solution deposited on the surface of the nut enables a film layer to be obtained that consists of an edible compound coating said nut. The drying may be done by any conventional method or technique. By way of example, the drying of the filmogenic solution deposited on the nut is done with air, at a temperature equal to or lower than 110 °C, although in some cases it may be necessary to achieve higher temperatures, of up to 200 °C.

In one particular embodiment, said drying may be done in the same rotary drum where the filmogenic solution was applied to the nut, by means of a blower that facilitates evaporation, as well as the transfer of matter (water vapour) and heat by convection. In this case, when the nut is chopped, it is advisable to stop rotation from time to time and carry out drying for a few minutes without stirring to prevent the exuding of the oil in the nut. In another particular embodiment, said drying may be speeded up by adding a compound in powder form, such as a polysaccharide, a lipid, an edible protein, the same as or different from the edible compounds present in the filmogenic solution. Alternatively or additionally, said drying may be carried out in a drying tunnel, air-conditioned chamber, oven or kiln, when the drying in the rotary drum is not sufficient to dry the filmogenic solution. In particular, said drying may be done in a drying tunnel that comprises the following areas:
1) Area for drying with hot air. In this area an initial removal of the content of water or other residual solvents present after the coating treatments and addition of additives takes place. In this way, the bulk of the solvent is removed, although this removal is often not sufficient to dispense with a subsequent drying phase.
2) Area for radiation drying with infra-red lamps. In this area the necessary solvent is removed in order to meet the required specifications, at the same time as a system is made available for carrying out a quick surface thermal treatment required in some cases (such as, for example, altering the physicochemical structure of the film).
3) Area for cooling with cold air. This area is useful for reducing the dwell times, although a compromise has to be reached between reducing temperature and increasing relative humidity in the air used.

This system sets out to be versatile as numerous of its operating variable may be altered, such as the temperature and speed of the drying and cooling air, the set-point temperature of the lamps and the total heating power (related to the number of lamps used and the individual power of each one), the speed of the drying belt, and the thickness of product moving along it, etc. Similarly, either all the above-mentioned areas may be used, or else just some of them in particular.

After complete drying of the filmogenic solution deposited on the nut to be coated, a film layer is obtained that consists of an edible compound selected from amongst HPMC, HPC, MC, CMC, EMC, AG, MD, an edible lipid or a combination of various edible lipids, and their mixtures.

The filmogenic solution application and drying stages may be repeated a variable number of times depending on the number of pre-coating or coating layers that we want to apply to the nut to be coated. The layers may be the same or different.

In another aspect, the invention refers to a product that comprises a nut provided with an edible coating and, furthermore, an additional coating selected from amongst sugar, honey, salt or chocolate that covers said nut provided with an edible coating, giving rise to products of the crunchy, caramelized, fried, roasted, salted, chocolate-coated type, or else combinations of caramel and salt.

The following examples illustrate the invention and should not be taken in a restrictive sense.

### EXAMPLE 1

### Application of polysaccharide films in roasted hazelnuts

Different coatings of peeled roasted hazelnut were prepared applying different aqueous solutions of polysaccharide derivatives. Specifically, the applications were executed as in the following table:

| **Product** | **Product trade name** | **% product in solution** | **% product in centre** |
|---|---|---|---|
| HPC | Klucel | 2 | 0.1 |
| CMC 1 | Blanose type 7HF | 2 | 0.1 |
| CMC 2 | Blanose type 7H4XF (Premium) | 1 | 0.05 |
| HPMC | Methocel E15 (Dow) | 4 | 0.1 |
| MC 1 | Methocel XCS 41126 (Dow) | 2 | 0.1 |
| MC 2 | Methocel A15 (Dow) | 4 | 0.1 |
| HPA | Aratex 75701 (Cerestar) | 30 | 0.75 |

| | | | |
|---|---|---|---|
| CMC: carboxymethyl cellulose; HPC: hydroxypropyl cellulose; HPMC: hydroxypropylmethyl cellulose; HPA: hydroxypropyl starch; MC: methyl cellulose | | | |

The coating is produced by adding the filmogenic solution directly to the nut and letting this roll in the coating drum for 5 minutes plus 10 minutes more with hot air drying. It is then left to dry in the oven at 40-45°C.

To assess the improvement in preservation in relation to uncoated product the different products obtained were subjected to accelerated ageing. First of all, they were conditioned in an open container, setting the external environmental conditions at 35°C - 75% relative humidity (in the oven) over different periods of time (conditioning time). Tests of oxidative stability were done on these conditioned samples by means of the Rancimat method at 120°C (Rancimat at 120°C, AOCS Cd 12b-92, 1992). Uncoated nut was used as the control.

The Rancimat method enables us to determine the oxidative stability of a nut by means of its forced degradation in the presence of oxygen at high temperatures. Thus, for the different samples to be tested the induction time is measured as a parameter. This is directly connected with the time the product remains without oxidizing in the desired conditions: the higher the induction time values, the greater the oxidative stability and, therefore, the better the product preservation.

Said parameter is determined automatically using the Rancimat apparatus, which consists of two parts:
- Wet Section: the samples are exposed here to a stream of air at a high temperature. As a result of this, the oils and fats contained in the nuts are oxidized in a forced way leading to a release of volatile organic acids. Said volatile decomposition products are collected in the measuring vessels of distilled water disposed for this purpose, and they are detected continuously by means of a conductivity cell.
- Control Unit: the different measurements obtained in the wet section are monitored and evaluated here. The results and the curves are recorded by means of a printer. One of the results that may be drawn from the curves recorded is the so-called induction time, in hours, the time as of which a sudden increase in conductivity takes place, indicating the end of the antioxidative protection inherent in the product.

The results are set out in Figures 1 and 2. As may be observed, the products coated with polysaccharide derivatives present longer induction times, i.e. they withstand oxidation much better than the control after 1 or 2 months conditioning. In particular, some cellulose derivatives, as HPMC, CMC 1, CMC 2 or MC 2, present a better performance than other products, for example, HPA, with induction times of around one hour more compared with the latter.

### EXAMPLE 2

### Application of polysaccharide films on whole Marcona almonds and subsequent caramelizing

To whole peeled raw Marcona almond two types of film were applied separately: one made from an aqueous solution of acacia gum (AG; AGRIGUM^{™} G/MH, "The Agriproducts group") and the other from hydroxypropylmethyl cellulose (HPMC; Methocel^{™} E15, Dow). The solutions prepared were of 33% and 8%, respectively. The reason for preparing a more concentrated solution of AG is its lower filmogenic capacity compared with HPMC. The quantities of polymers in relation to the centre are 0.08% in the case of HPMC and 0.33% in the case of AG. Once the film is applied in the coating drum, first the aqueous solution of sugar and honey (25% sugar, 25% honey and 50% water) is applied to the nut and then the powdered castor sugar. The product obtained is put into the fryer, immersing the coated caramelized nut in oil at an initial temperature of 180°C and finally at 165°C. The end product is drained and left to dry in the air.

To observe the evolution in preservation of caramelized samples with prior HPMC and AG coating in relation to one another and to the control (nut with no prior coated), the protocol described in Example 1 was followed, conditioning the samples in an open container in an oven at 35°C and 75% RH for several days. Samples were taken regularly to carry out the oxidative stability analysis (Rancimat at 120°C, AOCS Cd 12b-92, 1992) (confidence interval 95%).

The results are presented in Figure 3. In said Figure 3 an increase in the induction time may be observed, i.e. a noticeable improvement in the preservation of caramelized almonds previously coated with HPMC. After 65 days, the differences in induction times are practically 2 hours in relation to specimens coated with AG and two and a half hours in relation to the control.

### EXAMPLE 3

### Application of HPMC films to Largueta almond with salted peel and subsequent roasting

In this example the starting product is raw Largueta almond, which is immersed in an aqueous solution of common salt in a proportion of 190 g salt/kg of almond. After draining, a part of the almonds are coated with HPMC and others are left uncoated as the control and a third group is coated with AG (AGRIGUM^{™} G/MH, "The Agriproducts group"). It should be mentioned that AG had a negative effect on the organoleptic nature of the samples, so their evolution over time was not studied. The quantity of HPMC (Methocel^{™} E15, Dow) added is 0.5% HPMC in relation to the nut. Both the coated almonds and the control almonds are roasted for 1 h at 160°C.

To observe the evolution in preservation of the samples previously coated with HPMC and the control samples (nut with no prior coating), the protocol described in Examples 1 and 2 was followed, conditioning the samples in an open container in an oven at 35°C and 75% RH for several days. Samples were taken regularly to carry out the oxidative stability analysis (Rancimat at 120°C, AOCS Cd 12b-92, 1992) (confidence interval 95%).

The results are presented in Figure 4. In said Figure 4 an increase in the induction time may be observed, i.e. a noticeable improvement in the preservation of almonds coated with HPMC before being roasted. After 30 days, the differences in induction times are practically 2 hours in relation to the control samples.

### EXAMPLE 4

### Application of different methods of protection against oxidation in chopped and roasted pecan nuts (and evaluation of the synergic effect of combining various methods)

Different anti-oxidation treatments were prepared on roasted, chopped and screened pecan nut with a grain size of between 3.55 - 6 mm. Different treatments were applied to this product to compare the efficacy in terms of protection against oxidation of each of them. To be specific, three different treatments were carried out:
Treatment 1: Roasted chopped pecan nut coated with an HPMC film, using a 11.1% HPMC solution (with 1.1% HPMC in relation to the centre), with subsequent hot air drying.
Treatment 2: Roasted chopped pecan nut, to which an oily solution concentrated in tocopherols with a minimum tocopherol richness of 70% (Biocaps A 70), dissolved in turn in ethanol, so that the concentration of the oily concentrated tocopherol solution is 400 ppm in relation to the nut (the minimum pure tocopherol concentration is 280 ppm). Once this mixture of ethanol and concentrated tocopherol solution is applied, the resultant product is air-dried in order to evaporate and eliminate all the ethanol added.
Treatment 3: This treatment is a combination of the two preceding treatments, where first of all the tocopherol mixture is added according to the procedure described in treatment 2 and the HPMC film is then applied in the same conditions described in treatment 1.

To observe the evolution in the preservation of the products obtained after each treatment and of the control sample (untreated and uncoated, roasted chopped pecan nut), the protocol was followed as described in Examples 1 - 3, conditioning the samples in an open container, setting the external environmental conditions at 35°C and 75% relative humidity (hr) (in the oven) for several days. Samples were collected at intervals to perform the oxidative stability analysis (Rancimat at 120°C, AOCS Cd 12b-92, 1992).

The results are shown in figure 5. It may be seen in the aforesaid figure 5 how the use of any of the preservation treatments represents an improvement in the oxidative stability of the product: the values of the induction times are higher for the different products treated with any of the three treatment methods described compared with the values of the control. In other words, their oxidative stability is higher than that of the control. In the case of the product submitted to treatment 3, a combination of treatments 1 and 2, the improvement with regard to oxidative stability is even greater, a fact that is clearly noticeable from the values of the induction times obtained in the samples conditioned for 30 days in the above-described conditions. Thus, the difference between the oxidative stability of the control and that of the product obtained after treatment 3 is approximately 2 hours more in favour of the product treated. The difference with regard to the oxidative stability of the product submitted to treatment 3 as compared with the products submitted to treatments 1 and 2, respectively, is also clear, and in the case of the product submitted to treatment 3 a superior stability was obtained of more than 1 hour in respect of the other two cases. This therefore indicates a synergic anti-oxidation action when the two treatments are used together.

### EXAMPLE 5

### Combination of different anti-oxidation methods in roasted hazelnut sticks

To extend the useful life of roasted hazelnut sticks, a combined treatment consisting of the addition of a mixture of antioxidants (tocopherols ascorbyl palmitate) and a subsequent coating with a film of HPMC was applied to them. In another application, the treatment described was completed with the final addition of a layer of sugar. The typical average dimensions of these sticks correspond to a 4x4x6 mm prism. In the case of the addition of the mixture of antioxidants, said mixture is available commercially under the trademark Controx® LF 10 belonging to the company Cognis. The oily mixture contains approximately 7.5% tocopherols and 10% ascorbyl palmitate. In the present application this oily mixture was diluted in sunflower seed oil before application to the hazelnut sticks. The antioxidant concentration in relation to the total product was 500 ppm and the dilution of the commercial mixture in the sunflower seed oil of 100 ml of sunflower seed oil per 28.6 g of mixture. An 18% solution of HPMC was subsequently applied, obtained a product with a 2.0% HPMC content (the use of a larger amount of this product is due to the fact that, given the geometry of the centre that has to be coated, the value of the area/volume ratio is higher). Finally, the product is dried with hot air. This product was kept at room temperature in non-vacuum sealed plastic bags.

Regarding the product that has an outer layer of sugar, this is achieved by the application of a syrup made from 63.3 % de sucrose, 3.3 % glucose and 33.4 % water. This syrup is brought to the boil at 103°C and subsequently applied to the centre treated as described in the previous paragraphs, with hot air drying as well. The product that was obtained in this case had 20% sugars. This product was also kept at room temperature in non-vacuum sealed plastic bags.

To observe the evolution of the preservation of samples treated and coated and of the control samples (untreated and uncoated roasted hazelnut stick), these were conditioned as described previously (in non-vacuum sealed bags and exposed to room temperature) for several days. Samples were collected at intervals to perform the oxidative stability analysis (Rancimat at 120°C, AOCS Cd 12b-92, 1992).

The results are shown in figure 6. As may be observed in the aforesaid figure 6, the improvement of the preservation in the case of using the combined treatment consisting of the addition of the antioxidant mixture and the application of the barrier film is very noticeable: the values of the induction times are superior for the products subjected to this combined treatment with regard to the control values. The same thing happens in the case of the samples subjected to said combined treatment and subsequently coated with a layer of sugar, although the differences are not so great as in the former case.

## Claims

1. A nut provided with an edible coating, which comprises:
a nut, and
at least, a layer of coating for said nut that comprises an edible film, said film consisting of an edible compound selected from the group formed of hydroxypropylmethyl cellulose (HPMC), hydroxypropyl cellulose (HPC), methyl cellulose (MC), carboxymethyl cellulose (CMC), ethylmethyl cellulose (EMC), acacia gum (GA), maltodextrin (MD), a lipid or a combination of various lipids, and their mixtures.

2. Nut coated according to claim 1, in which said nut is selected from the group formed of hazelnuts, almonds, walnuts, peanuts, pistachios, pine nuts, macadamia nuts, pecan nuts, raisins, cocoa beans, cashews, chestnuts, extruded cereals, and soybean derivatives.

3. Nut coated according to claim 1, in which said nut is either whole or chopped.

4. Nut coated according to claim 1, in which said edible compound is selected from the group formed of hydroxypropylmethyl cellulose (HPMC), hydroxypropyl cellulose (HPC), methyl cellulose (MC), carboxymethyl cellulose (CMC), ethylmethyl cellulose (EMC) and their mixtures.

5. Nut coated according to claim 1, in which said edible compound comprises a mixture of acacia gum (AG) and maltodextrin (MD).

6. Nut coated according to claim 1, in which said edible compound comprises a mixture of (i) a cellulose ether selected from amongst hydroxypropylmethyl cellulose (HPMC), hydroxypropyl cellulose (HPC), methyl cellulose (MC), carboxymethyl cellulose (CMC), ethylmethyl cellulose (EMC) and their mixtures, and (ii) acacia gum (AG).

7. Nut coated according to claim 1, in which said edible compound comprises a mixture of (i) a cellulose ether selected from amongst hydroxypropylmethyl cellulose (HPMC), hydroxypropyl cellulose (HPC), methyl cellulose (MC), carboxymethyl cellulose (CMC), ethylmethyl cellulose (EMC) and their mixtures, and (ii) a lipid or a combination of various lipids.

8. Nut coated according to claim 1, which comprises between 0.05% and 4%, preferably between 0.05 and 2% by weight of edible compound, expressed in dry weight in relation to the total weight of the nut coated.

9. Nut coated according to claim 1, in which the thickness of the coating layer for said nut that comprises an edible film, ranges from 5 µm to 1 mm, preferably, 10 - 200 µm.

10. Nut coated according to claim 1, which further comprises an additive selected from the group formed of plasticizers, antioxidants, functional and/or bioactive or nutraceutical components, colours, aromas, flavour boosters, sweeteners, polishers, and their mixtures.

11. A procedure for producing a nut coated with an edible coating according to any of the claims 1 to 10, which comprises the stages of:
a) applying a filmogenic solution that consists of a solvent and an edible compound selected from the group formed of hydroxypropylmethyl cellulose (HPMC), hydroxy propyl cellulose (HPC), methyl cellulose (MC), carboxymethyl cellulose (CMC), ethylmethyl cellulose (EMC), acacia gum (AG), maltodextrin (MD), a lipid or a combination of various lipids, and their mixtures, on the surface of a nut to be coated; and
b) drying the filmogenic solution deposited on the surface of said nut to be coated.

12. Procedure according to claim 11, in which said filmogenic solution consists of a solvent and an edible compound selected from amongst the group formed of hydroxypropylmethyl cellulose (HPMC), hydroxypropyl cellulose (HPC), methyl cellulose (MC), carboxymethyl cellulose (CMC), ethylmethyl cellulose (EMC) and their mixtures.

13. Procedure according to claim 11, in which said edible compound comprises a mixture of acacia gum (AG) and maltodextrin (MD).

14. Procedure according to claim 11, in which said edible compound comprises a mixture of (i) cellulose ether selected from amongst hydroxypropylmethyl cellulose (HPMC), hydroxypropyl cellulose (HPC), methyl cellulose (MC), carboxymethyl cellulose (CMC), ethylmethyl cellulose (EMC), and their mixtures, and (ii) acacia gum (AG).

15. Procedure according to claim 11, in which said edible compound comprises a mixture of (i) cellulose ether selected from amongst hydroxypropylmethyl cellulose (HPMC), hydroxypropyl cellulose (HPC), methyl cellulose (MC), carboxymethyl cellulose (CMC), ethylmethyl cellulose (EMC), and their mixtures, and (ii) a lipid or a combination of various lipids.

16. Procedure according to claim 11, in which said filmogenic solution comprises an edible compound in a concentration between 1% - 50% by weight.

17. Procedure according to claim 16, in which said filmogenic solution comprises an edible compound selected from the group formed of hydroxypropylmethyl cellulose (HPMC), hydroxypropyl cellulose (HPC), methyl cellulose (MC), carboxymethyl cellulose (CMC), ethylmethyl cellulose (EMC), and their mixtures, in a concentration between 1% and 20% by weight, preferably, between 2% - 14% by weight.

18. Procedure according to claim 11, in which said filmogenic solution is applied on the nut to be coated in a rotary drum by dripping or spraying.

19. Procedure according to claim 11, in which the quantity of edible compound present in the coated nut, expressed in dry weight in relation to the total weight of the coated nut lies between 0.05 and 4% by weight, preferably between 0.05 - 2% by weight.

20. Procedure according to claim 11, in which the drying of said filmogenic solution deposited on said nut to be coated is done with air at a temperature equal to or lower than 200 °C, preferably at a temperature equal to or lower than 110°C.

21. Procedure according to claim 11, in which the drying of said filmogenic solution deposited on said nut to be coated comprises the addition of a compound in powder form, selected from amongst an edible polysaccharide, an edible lipid, an edible protein, and their mixtures, the same as or different from the edible compounds present in the filmogenic solution.

22. Procedure according to claim 11, in which the drying of said filmogenic solution deposited on said nut to be coated is done in a rotary drum by means of a blower.

23. Procedure according to claim 11, in which the drying of said filmogenic solution deposited on said nut is done in a drying tunnel, air-conditioned chamber, oven or kiln.

24. Procedure according to claim 11, in which the drying of said filmogenic solution deposited on said nut is done in a drying tunnel that comprises the following areas:
1) hot air drying;
2) infra-red lamp radiation drying; and
3) cold air cooling.

25. Procedure according to claim 11, which comprises repeating a variable number of times the stages involved in the application (stage a) and drying (stage b) of the filmogenic solution.

26. Procedure according to claim 11, in which said layers are the same or different.

27. Procedure according to claim 11, which further comprises the addition of one or more additives to said coated nut.

28. A derivative of a nut which comprises a nut coated according to any of claims 1 to 10, or obtainable by means of a procedure according to any of claims 11 to 27 and, furthermore, an additional coating selected from amongst sugar, honey, salt or chocolate, which covers said coated nut.

## Patentansprüche

1. Nuss, die mit einem essbaren Überzug versehen ist, welche umfasst:
eine Nuss und
wenigstens eine Schicht eines Überzugs für diese Nuss, welche einen essbaren Film umfasst, wobei der Film aus einer essbaren Verbindung besteht, die aus der aus Hydroxypropylmethylcellulose (HPMC), Hydroxypropylcellulose (HPC), Methylcellulose (MC), Carboxymethylcellulose (CMC), Ethylmethylcellulose (EMC), Akaziengummi (GA), Maltodextrin (MD), einem Lipid oder einer Kombination von verschiedenen Lipiden und ihren Mischungen gebildeten Gruppe ausgewählt ist.

2. Überzogene Nuss nach Anspruch 1, wobei diese Nuss aus der aus Haselnüssen, Mandeln, Walnüssen, Erdnüssen, Pistazien, Pinienkernen, Macadamianüssen, Pekannüssen, Rosinen, Kakaobohnen, Cashewnüssen, Kastanien, extrudierten Cerealien und Sojabohnenderivaten gebildeten Gruppe ausgewählt ist.

3. Überzogene Nuss nach Anspruch 1, wobei die Nuss entweder ganz oder zerkleinert ist.

4. Überzogene Nuss nach Anspruch 1, wobei die essbare Verbindung aus der aus Hydroxypropylmethylcellulose (HPMC), Hydroxypropylcellulose (HPC), Methylcellulose (MC), Carboxymethylcellulose (CMC), Ethylmethylcellulose (EMC) und ihren Mischungen gebildeten Gruppe ausgewählt ist.

5. Überzogene Nuss nach Anspruch 1, wobei die essbare Verbindung eine Mischung aus Akaziengummi (AG) und Maltodextrin (MD) umfasst.

6. Überzogene Nuss nach Anspruch 1, wobei die essbare Verbindung eine Mischung aus (i) einem Celluloseether, ausgewählt aus Hydroxypropylmethylcellulose (HPMC), Hydroxypropylcellulose (HPC), Methylcellulose (MC), Carboxymethylcellulose (CMC), Ethylmethylcellulose (EMC) und ihren Mischungen, und (ii) Akaziengummi (AG) umfasst.

7. Überzogene Nuss nach Anspruch 1, wobei die essbare Verbindung eine Mischung aus (i) einem Celluloseether, ausgewählt aus Hydroxypropylmethylcellulose (HPMC), Hydroxypropylcellulose (HPC), Methylcellulose (MC), Carboxymethylcellulose (CMC), Ethylmethylcellulose (EMC) und ihren Mischungen, und (ii) einem Lipid oder einer Kombination von verschiedenen Lipiden umfasst.

8. Überzogene Nuss nach Anspruch 1, welche zwischen 0,05 und 4 Gew.-%, vorzugsweise zwischen 0,05 und 2 Gew.-% essbare Verbindung umfasst, angegeben als Trockengewicht bezogen auf das Gesamtgewicht der überzogenen Nuss.

9. Überzogene Nuss nach Anspruch 1, wobei die Dicke der Überzugsschicht für diese Nuss, welche einen essbaren Film umfasst, im Bereich von 5 µm bis 1 mm, vorzugsweise 10 bis 200 µm liegt.

10. Überzogene Nuss nach Anspruch 1, welche außerdem einen Zusatz umfasst, der aus der aus Weichmachern, Antioxidanzien, funktionellen und/oder biologisch aktiven oder nutrazeutischen Komponenten, Farbstoffen, Aromastoffen, Geschmacksverstärkern, Süßungsmitteln, Poliermitteln und ihren Mischungen gebildeten Gruppe ausgewählt ist.

11. Verfahren zum Herstellen einer mit einem essbaren Überzug überzogenen Nuss nach einem der Ansprüche 1 bis 10, welches die folgenden Stufen umfasst:
a) Aufbringen einer filmbildenden Lösung, welche aus einem Lösungsmittel und einer essbaren Verbindung besteht, die aus der aus Hydroxypropylmethylcellulose (HPMC), Hydroxypropylcellulose (HPC), Methylcellulose (MC), Carboxymethylcellulose (CMC), Ethylmethylcellulose (EMC), Akaziengummi (AG), Maltodextrin (MD), einem Lipid oder einer Kombination von verschiedenen Lipiden und deren Mischungen gebildeten Gruppe ausgewählt ist, auf die Oberfläche einer zu überziehenden Nuss; und
b) Trocknen der filmbildenden Lösung, die auf der Oberfläche der zu überziehenden Nuss abgeschieden ist.

12. Verfahren nach Anspruch 11, wobei die filmbildende Lösung aus einem Lösungsmittel und einer essbaren Verbindung besteht, die aus der aus Hydroxypropylmethylcellulose (HPMC), Hydroxypropylcellulose (HPC), Methylcellulose (MC), Carboxymethylcellulose (CMC), Ethylmethylcellulose (EMC) und ihren Mischungen gebildeten Gruppe ausgewählt ist.

13. Verfahren nach Anspruch 11, wobei die essbare Verbindung eine Mischung aus Akaziengummi (AG) und Maltodextrin (MD) umfasst.

14. Verfahren nach Anspruch 11, wobei die essbare Verbindung eine Mischung aus (i) Celluloseether, ausgewählt aus Hydroxypropylmethylcellulose (HPMC), Hydroxypropylcellulose (HPC), Methylcellulose (MC), Carboxymethylcellulose (CMC), Ethylmethylcellulose (EMC) und ihren Mischungen, und (ii) Akaziengummi (AG) umfasst.

15. Verfahren nach Anspruch 11, wobei die essbare Verbindung eine Mischung aus (i) Celluloseether, ausgewählt aus Hydroxypropylmethylcellulose (HPMC), Hydroxypropylcellulose (HPC), Methylcellulose (MC), Carboxymethylcellulose (CMC), Ethylmethylcellulose (EMC) und ihren Mischungen, und (ii) einem Lipid oder einer Kombination von verschiedenen Lipiden umfasst.

16. Verfahren nach Anspruch 11, wobei die filmbildende Lösung eine essbare Verbindung in einer Konzentration zwischen 1 - 50 Gew.-% umfasst.

17. Verfahren nach Anspruch 16, wobei die filmbildende Lösung eine essbare Verbindung, die aus der aus Hydroxypropylmethylcellulose (HPMC), Hydroxypropylcellulose (HPC), Methylcellulose (MC), Carboxymethylcellulose (CMC), Ethylmethylcellulose (EMC) und ihren Mischungen gebildeten Gruppe ausgewählt ist, in einer Konzentration zwischen 1 und 20 Gew.-%, vorzugsweise zwischen 2 - 14 Gew.-% umfasst.

18. Verfahren nach Anspruch 11, wobei die filmbildende Lösung in einer Drehtrommel durch Tröpfeln oder Sprühen auf die zu überziehende Nuss aufgebracht wird.

19. Verfahren nach Anspruch 11, wobei die Menge der essbaren Verbindung, die in der überzogenen Nuss vorhanden ist, angegeben als Trockengewicht bezogen auf das Gesamtgewicht der überzogenen Nuss, zwischen 0,05 und 4 Gew.-%, vorzugsweise zwischen 0,05 - 2 Gew.-% liegt.

20. Verfahren nach Anspruch 11, wobei das Trocknen der auf der zu überziehenden Nuss abgeschiedenen filmbildenden Lösung mit Luft bei einer Temperatur von 200 °C oder weniger, vorzugsweise bei einer Temperatur von 110 °C oder weniger erfolgt.

21. Verfahren nach Anspruch 11, wobei das Trocknen der auf der zu überziehenden Nuss abgeschiedenen filmbildenden Lösung die Zugabe einer Verbindung in Pulverform umfasst, die aus einem essbaren Polysaccharid, einem essbaren Lipid, einem essbaren Protein und ihren Mischungen ausgewählt ist, wobei es sich um die gleiche oder eine von den essbaren Verbindungen, die in der filmbildenden Lösung vorhanden sind, verschiedene Verbindung handelt.

22. Verfahren nach Anspruch 11, wobei das Trocknen der auf der zu überziehenden Nuss abgeschiedenen filmbildenden Lösung in einer Drehtrommel mittels eines Gebläses erfolgt.

23. Verfahren nach Anspruch 11, wobei das Trocknen der auf der Nuss abgeschiedenen filmbildenden Lösung in einem Trockenkanal, einer klimatisierten Kammer, einem Ofen oder einer Trockenkammer erfolgt.

24. Verfahren nach Anspruch 11, wobei das Trocknen der auf der Nuss abgeschiedenen filmbildenden Lösung in einem Trockenkanal erfolgt, welcher die folgenden Bereiche umfasst:
1) Heißlufttrocknen;
2) Trocknen durch Strahlung einer Infrarotlampe; und
3) Kaltluftkühlung.

25. Verfahren nach Anspruch 11, welches eine variable Anzahl von Wiederholungen der Stufen umfasst, die bei dem Aufbringen (Stufe a) und Trocknen (Stufe b) der filmbildenden Lösung beteiligt sind.

26. Verfahren nach Anspruch 11, wobei die Schichten gleich oder verschieden sind.

27. Verfahren nach Anspruch 11, welches außerdem die Zugabe von einem oder mehreren Zusätzen zu der überzogenen Nuss umfasst.

28. Derivat einer Nuss, welches eine überzogene Nuss nach einem der Ansprüche 1 bis 10, oder erhältlich mittels eines Verfahrens nach einem der Ansprüche 11 bis 27, und außerdem einen zusätzlichen Überzug, ausgewählt aus Zucker, Honig, Salz oder Schokolade, welcher die überzogene Nuss bedeckt, umfasst.

## Revendications

1. Noix munie d'un recouvrement comestible, qui comprend:
une noix, et
au moins une couche de recouvrement pour ladite noix qui comprend un film comestible, ledit film consistant en un composé comestible sélectionné dans le groupe formé par la hydroxypropylméthyl cellulose (HPMC), hydroxypropyl cellulose (HPC), méthyl cellulose (MC), carboxyméthyl cellulose (CMC), éthylméthyl cellulose (EMC), gomme arabique (GA), maltodextrine (MD), un lipide ou une combinaison de divers lipides, et leurs mélanges.

2. Noix recouverte selon la revendication 1, où ladite noix est sélectionnée dans le groupe formé par des noisettes, amandes, noix, arachides, pistaches, pignons, noix de macadamia, noix de pacanes, raisins secs, fèves de cacao, noix de cajou, marrons, céréales pressées, et dérivés de soja.

3. Noix recouverte selon la revendication 1, où ladite noix est soit entière soit hâchée.

4. Noix recouverte selon la revendication 1, où ledit composé comestible est sélectionné dans le groupe formé par la hydroxypropylméthyl cellulose (HPMC), hydroxypropyl cellulose (HPC), méthyl cellulose (MC), carboxyméthyl cellulose (CMC), éthylméthyl cellulose (EMC) et leurs mélanges.

5. Noix recouverte selon la revendication 1, où ledit composé comestible comprend un mélange de gomme arabique (AG) et de maltodextrine (MD).

6. Noix recouverte selon la revendication 1, où ledit composé comestible comprend un mélange de (i) un éther de cellulose sélectionné parmi la hydroxypropylméthyl cellulose (HPMC), hydroxypropyl cellulose (HPC), méthyl cellulose (MC), carboxyméthyl cellulose (CMC), éthylméthyl cellulose (EMC) et leurs mélanges, et (ii) de gomme arabique (AG).

7. Noix recouverte selon la revendication 1, où ledit composé comestible comprend un mélange de (i) un éther de cellulose sélectionné parmi la hydroxypropylméthyl cellulose (HPMC), hydroxypropyl cellulose (HPC), méthyl cellulose (MC), carboxyméthyl cellulose (CMC), éthylméthyl cellulose (EMC) et leurs mélanges, et (ii) un lipide ou une combinaison de divers lipides.

8. Noix recouverte selon la revendication 1, qui comprend entre 0,05% et 4%, de préférence entre 0,05 et 2% en poids du composé comestible, exprimé en poids sec par rapport au poids total de la noix recouverte.

9. Noix recouverte selon la revendication 1, où l'épaisseur de la couche de recouvrement de ladite noix qui comprend un film comestible, s'étend de 5µm à 1 mm, de préférence de 10 à 200 µm.

10. Noix recouverte selon la revendication 1, qui comprend en outre un additif sélectionné dans le groupe formé de plastifiants, antioxydants, composants fonctionnels et/ou bioactifs ou nutraceutiques, colorants, arômes, aromatisants, édulcorants, polisseurs et leurs mélanges.

11. Procédé de production d'une noix recouverte d'un recouvrement comestible selon l'une quelconque des revendications 1 à 10, qui comprend les étapes de:
a) appliquer une solution filmogène qui consiste en un solvant et un composé comestible sélectionné dans le groupe formé par la hydroxypropylméthyl cellulose (HPMC), hydroxypropyl cellulose (HPC), méthyl cellulose (MC), carboxyméthyl cellulose (CMC), éthylméthyl cellulose (EMC), gomme arabique (GA), maltodextrine (MD), un lipide ou une combinaison de divers lipides, et leurs mélanges, sur la surface d'une noix à recouvrir; et
b) sécher la solution filmogène déposée sur la surface de ladite noix à recouvrir.

12. Procédé selon la revendication 11, dans lequel ladite solution filmogène consiste en un solvant et un composé comestible sélectionné dans le groupe formé par la hydroxypropylméthyl cellulose (HPMC), hydroxypropyl cellulose (HPC), méthyl cellulose (MC), carboxyméthyl cellulose (CMC), éthylméthyl cellulose (EMC) et leurs mélanges.

13. Procédé selon la revendication 11, dans lequel ledit composé comestible comprend un mélange de gomme arabique (AG) et de maltodextrine (MD).

14. Procédé selon la revendication 11, dans lequel ledit composé comestible comprend un mélange de (i) éther de cellulose sélectionné parmi la hydroxypropylméthyl cellulose (HPMC), hydroxypropyl cellulose (HPC), méthyl cellulose (MC), carboxyméthyl cellulose (CMC), éthylméthyl cellulose (EMC) et leurs mélanges, et (ii) de gomme arabique (AG).

15. Procédé selon la revendication 11, dans lequel ledit composé comestible comprend un mélange de (i) éther de cellulose sélectionné parmi la hydroxypropylméthyl cellulose (HPMC), hydroxypropyl cellulose (HPC), méthyl cellulose (MC), carboxyméthyl cellulose (CMC), éthylméthyl cellulose (EMC) et leurs mélanges, et (ii) un lipide ou une combinaison de divers lipides.

16. Procédé selon la revendication 11, dans lequel ladite solution filmogène comprend un composé comestible en une concentration entre 1% - 50% en poids.

17. Procédé selon la revendication 16, dans lequel ladite solution filmogène comprend un composé comestible sélectionné dans le groupe formé par la hydroxypropylméthyl cellulose (HPMC), hydroxpropyl cellulose (HPC), méthyl cellulose (MC), carboxyméthyl cellulose (CMC), éthylméthyl cellulose (EMC), et leurs mélanges, dans une concentration entre 1% et 20% en poids, de préférence entre 2% et 14% en poids.

18. Procédé selon la revendication 11, dans lequel ladite solution filmogène est appliquée à la noix à recouvrir dans un tambour rotatif par des gouttes ou par pulvérisation.

19. Procédé selon la revendication 11, dans lequel la quantité de composé comestible présente dans la noix recouverte, exprimée en poids sec par rapport au poids total de la noix recouverte se situe entre 0,05 et 4% en poids, de préférence entre 0,05-2% en poids.

20. Procédé selon la revendication 11, dans lequel le séchage de ladite solution filmogène déposée sur ladite noix à recouvrir est effectuée avec de l'air à une température égale ou inférieure à 200°C, de préférence à une température égale ou inférieure à 110°C.

21. Procédé selon la revendication 11, dans lequel le séchage de ladite solution filmogène déposée sur ladite noix à recouvrir comprend l'addition d'un composé sous forme de poudre, sélectionné parmi un polysaccharide comestible, un lipide comestible, une protéine comestible et leurs mélanges, les mêmes ou différents des composés comestibles présents dans la solution filmogène.

22. Procédé selon la revendication 11, dans lequel le séchage de ladite solution filmogène déposé sur ladite noix à recouvrir est effectué dans un tambour rotatif par une soufflante.

23. Procédé selon la revendication 11, dans lequel le séchage de ladite solution filmogène déposée sur ladite noix est effectué dans un tunnel de séchage, une chambre à air conditionnée, fourneau ou four.

24. Procédé selon la revendication 11, dans lequel le séchage de ladite solution filmogène déposée sur ladite noix est effectué dans un tunnel de séchage qui comprend les zones suivantes:
1) séchage à air chaud;
2) séchage par rayonnement à lampe infrarouge; et
3) refroidissement à air froid.

25. Procédé selon la revendication 11, qui comprend la répétition d'un nombre variable de fois des étapes impliquées dans l'application (étape a) et le séchage (étape b) de la solution filmogène.

26. Procédé selon la revendication 11, dans lequel lesdites couches sont les mêmes ou différentes.

27. Procédé selon la revendication 11, qui comprend en outre l'addition d'un ou de plusieurs additifs à ladite noix recouverte.

28. Dérivé d'une noix qui comprend une noix recouverte selon l'une quelconque des revendications 1 à 10, ou pouvant être obtenu au moyen d'un procédé selon l'une quelconque des revendications 11 à 27 et, en outre, un recouvrement additionnel sélectionné parmi le sucre, miel, sel ou chocolat, qui couvre ladite noix recouverte.
